# EUROPÄISCHE PATENTSCHRIFT

(11) **EP 3 403 989 B1**
(45) Veröffentlichungstag und Bekanntmachung des Hinweises auf die Patenterteilung: **04.05.2022**
(21) Anmeldenummer: 18172376.8
(22) Anmeldetag: 15.05.2018
(51) Int. Cl.: B66F 9/075, B66F 9/24, G06K 9/00

(54) **VERFAHREN ZUM ANPASSEN EINES BETRIEBSPARAMETERS**
METHOD FOR ADAPTING AN OPERATING PARAMETER
PROCÉDÉ DE RÉGLAGE D'UN PARAMÈTRE DE FONCTIONNEMENT

(30) Priorität: 19.05.2017 DE 102017208516
(43) Veröffentlichungstag der Anmeldung: 21.11.2018
(73) Patentinhaber: Jungheinrich Aktiengesellschaft, 22047 Hamburg (DE)
(72) Erfinder: LANZINGER, Bernhard, 85465 Langenpreising (DE); KRONTHALER, Peter, 85413 Hörgertshausen (DE); BURKHART, Adrian, 3225 Müntschemier (CH); MERKLINGER, Matthias, 4313 Möhlin (CH)
(74) Vertreter: Weickmann & Weickmann PartmbB

(56) Entgegenhaltungen:
- DE-A1- 10 311 240
- DE-A1-102009 057 553
- US-A- 4 566 032

## Beschreibung

Die vorliegende Erfindung betrifft ein Verfahren zum Anpassen wenigstens eines Betriebsparameters eines Fahrzeugs während seiner Fahrt, ein derartiges Fahrzeug sowie ein System, umfassend ein derartiges Fahrzeug und einen von dem Fahrzeug befahrbaren Untergrund.

Beim Einsatz von Fahrzeugen, insbesondere von Flurförderzeugen, kann es gewünscht sein, dass die Fahrzeuge während ihrer Fahrt abhängig von ihrer momentanen Position wenigstens einen ihrer Betriebsparameter automatisch anpassen, ohne dass hierfür der Fahrer aktiv eingreifen muss.

Beispielsweise kann es im Fall von Flurförderzeugen gewünscht sein, dass die Fahrzeuge in einem bestimmten Bereich einer Lagerhalle oder eines Werksgeländes mit einer verminderten Geschwindigkeit fahren, d.h. dass unabhängig von den vom Fahrer eingegebenen Fahranweisungen, wie beispielsweise dem Öffnungswinkel eines Gaspedals, vom Fahrzeug selbst eine momentan zulässige Höchstgeschwindigkeit festgelegt wird.

Bei diesen Bereichen, in denen eine relativ niedrige maximale Geschwindigkeit festgelegt werden soll, kann es sich beispielsweise um Gefahrenbereiche handeln, in denen sich vermehrt Personen aufhalten oder in denen ein vergrößertes Verkehrsaufkommen von Fahrzeugen erwartet wird, so in etwa Fußgängerübergänge oder Kreuzungen. Ferner kann es wünschenswert sein, in vorbestimmten Parkbereichen für derartige Fahrzeuge aus Sicherheitsgründen bestimmte Fahrzeugfunktionen automatisch zu deaktivieren und sie erst bei Verlassen der Parkbereiche freizugeben.

Andererseits können auf demselben Gelände Bereiche vorliegen, in denen die Fahrzeuge große Strecken zurückzulegen haben und in denen nicht mit dem Auftreten von gefährlichen Situationen gerechnet wird. Um in diesen Bereichen nicht durch die Festlegung einer allgemein vorgegebenen, relativ niedrigen Höchstgeschwindigkeit die Umschlagsleistung zu verringern, kann es wünschenswert sein, in diesen Bereichen die maximale Geschwindigkeit der Fahrzeuge freizugeben, d.h. die Beschränkung der Höchstgeschwindigkeit der Fahrzeug aufzuheben.

Wenngleich es sich bei der maximal zulässigen Geschwindigkeit um ein besonders anschauliches Beispiel für einen anpassbaren Betriebsparameter handelt, kann es auch wünschenswert sein, andere Betriebsparameter eines Fahrzeugs abhängig von der momentanen Position des Fahrzeugs automatisch anzupassen, beispielsweise könnte bei einem Übergang von einem Bereich unter freiem Himmel in einen überdachten Bereich automatisch der Scheibenwischer eines Fahrzeugs deaktiviert werden.

Zu diesem Zweck sind aus dem Stand der Technik verschiedene Verfahren und Systeme bekannt, mittels derer abhängig von der Position eines Fahrzeugs ein Betriebsparameter des Fahrzeugs angepasst werden kann. Beispielsweise ist aus der DE 102 60 771 B4 ein System bekannt, in dem ein externer Sender ein Anregungssignal aussendet, das von einem dem Fahrzeug zugeordneten Sensor erfasst wird und auf dessen Grundlage ein Leistungsparameter des Fahrzeugs angepasst wird. Beispielsweise kann es sich bei der externen Anregung um elektromagnetische Strahlung und insbesondere Infrarotstrahlung handeln.

Weiterhin ist beispielsweise aus der US 2016/0185291 A1 ein System bekannt, in dem die Geschwindigkeit eines Fahrzeugs auf der Grundlage einer von einem drahtlosen Positionserfassungsmodul erfassten Position angepasst werden kann, wobei es sich beispielsweise um GPS- oder RFIDbasierte Positionserfassungsmodule handeln kann.

Außerdem ist aus der US 4,566,032, welche den Oberbegriff der unabhängigen Ansprüche 1 und 5 offenbart, bekannt, ein führerloses Fahrzeug mit Hilfe von auf dem zu befahrenden Boden aufgebrachten Barcodes entlang vorbestimmter Wege zu führen. Der Vollständigkeit halber sei ferner auf die DE 10 2009 057 553 A1 und die DE 103 11 240 A1 verwiesen.

Ferner sind auch Systeme bekannt, in denen an vorbestimmten Positionen eines Geländes Lichtschranken positioniert sind, mit deren Hilfe ein Passieren eines Fahrzeugs erfasst werden kann, woraufhin dem Fahrzeug über eine drahtlose Datenverbindung Steuerbefehle, beispielsweise zum Verringern einer maximalen zulässigen Geschwindigkeit, übermittelt werden können. Zuletzt sind Systeme bekannt, in denen mittels eines Lasersensors auf dem Dach eines Fahrzeugs erfasst werden kann, ob sich das Fahrzeug momentan unter freiem Himmel oder in einem überdachten Bereich befindet. Alle der eben genannten Verfahren und Systeme haben jedoch im Betrieb Nachteile. Beispielsweise sind aktive verteilte Systeme, in denen externe Sender und dem Fahrzeug zugeordnete Empfänger eingesetzt werden, relativ teuer in der Anschaffung und störungsanfällig, da jeweils mehrere Komponenten betrieben und gewartet werden müssen. Ferner muss darauf geachtet werden, dass aus Kompatibilitätsgründen einheitliche Standards für alle eingesetzten Fahrzeuge eingehalten werden, so dass Aktualisierungen der anzupassenden Betriebsparameter in der Regel mühsam sind. Mit GPS- oder RFID-basierten Positionserfassungen lässt sich hingegen in der Regel nur außerhalb geschlossener Hallen bzw. in einem eng begrenzten Bereich eines Geländes arbeiten. Zuletzt sind Lichtschranken-basierte Systeme anfällig gegen Verschmutzungen und es kann bei ihnen zu Fehlern kommen, wenn zwei Fahrzeuge gleichzeitig eine einzelne Lichtschranke passieren oder die Lichtschranke anderweitig verstellt ist.

Ferner ist es für den Fahrer des Fahrzeugs und umstehende Personen nicht ohne weiteres möglich, zu erkennen, ob die genannten Systeme installiert und funktionsbereit sind, in welchem Bereich sich das Fahrzeug momentan befindet, welchen Wert ein Betriebsparameter dementsprechend momentan haben sollte und in welchem Bereich sich beispielsweise ein Fußgänger selbst gerade befindet. Geeignet gewählte und auch von menschlichen Betrachtern identifizierbare und interpretierbare Kennzeichnungen könnten hier zu einem Zusatznutzen führen.

Es ist daher die Aufgabe der vorliegenden Erfindung, die Nachteile des bekannten Standes der Technik auszuräumen und ein Verfahren zum Anpassen wenigstens eines Betriebsparameters eines Fahrzeugs während seiner Fahrt bereitzustellen, das preisgünstig, ausfallssicher und leicht zu installieren, warten und zu aktualisieren ist.

Hierzu umfasst das erfindungsgemäße Verfahren die folgenden Schritte:
- Erfassen des Untergrunds, auf welchem die Fahrt des Fahrzeugs stattfindet, mittels einer dem Fahrzeug zugeordneten optischen Erfassungseinrichtung;
- Ausgeben von wenigstens eine Eigenschaft des Untergrunds repräsentierenden Daten durch die Erfassungseinrichtung;
- Auswerten der Daten hinsichtlich eines Vorliegens einer ersten vorbestimmten Bedingung;
- auf ein Vorliegen der ersten vorbestimmten Bedingung hin: Auswerten der Daten hinsichtlich eines Vorliegens einer zweiten vorbestimmten Bedingung; und
- auf ein Vorliegen der zweiten vorbestimmten Bedingung hin: Anpassen des wenigstens einen Betriebsparameters gemäß einer vorbestimmten Anpassungsvorschrift.

Indem erfindungsgemäß der Untergrund, auf dem sich das Fahrzeug ohnehin bewegt, mittels einer dem Fahrzeug zugeordneten optischen Erfassungseinrichtung erfasst wird, kann auf externe Sender zum Anpassen des wenigstens einen Betriebsparameters während der Fahrt des Fahrzeugs verzichtet werden. Anders ausgedrückt ist lediglich dem Fahrzeug ein aktives System zugeordnet, wodurch bereits zahlreiche mögliche Fehlerquellen beseitigt und der Installations- und Wartungsaufwand deutlich verringert wird. Ferner ist es ein Verdienst der Erfinder, erkannt zu haben, dass durch das erfindungsgemäße Verfahren auf eine Erfassung der tatsächlichen momentanen Position des Fahrzeugs verzichtet werden kann, solange geeignete Markierungen auf dem Untergrund vorgesehen sind, die das Fahrzeug während seiner Fahrt zu überfahren hat, wenn es in einen Bereich einfährt, in dem der wenigstens eine Betriebsparameter anzupassen ist.

Erfindungsgemäß wird das Auswerten der Daten hinsichtlich des Vorliegens der zweiten Bedingung lediglich innerhalb einer vorbestimmten Zeitspanne und/oder während einer vorbestimmten zurückgelegten Wegstrecke nach Vorliegen der ersten Bedingung durchgeführt werden. Wird die zweite vorbestimmte Bedingung nicht innerhalb der vorbestimmten Zeitspanne und/oder während der vorbestimmten zurückgelegten Wegstrecke nach Vorliegen der ersten Bedingung erfasst, so beginnt das Verfahren von neuem erneut mit dem Auswerten der Daten hinsichtlich des Vorliegens der ersten vorbestimmten Bedingung.

Durch diese zusätzliche Maßnahme können zahlreiche weitere mögliche Fehlerquellen eliminiert werden, beispielsweise in dem Fall, dass eine der beiden vorbestimmten Bedingungen nicht fehlerfrei erfasst wird. Die vorbestimmte Zeitspanne und/oder die vorbestimmte Wegstrecke können hierbei geeignet gewählt werden, um die gewünschte Wirkung des erfindungsgemäßen Verfahrens sicherzustellen, indem sie einerseits groß genug sind, so dass zusammengehörige erste und zweite vorbestimmte Bedingungen auch tatsächlich gemeinsam erfasst werden, sie andererseits aber auch klein genug sind, so dass das Verfahren rechtzeitig von neuem beginnt, wenn eine der beiden Bedingungen nicht richtig erfasst worden ist.

In einer bevorzugten Ausführungsform des erfindungsgemäßen Verfahrens kann die erste und/oder zweite Bedingung ein Vorliegen einer Markierung mit einer vorbestimmten Farbe auf dem Untergrund sein. Farbige Markierungen stellen eine preisgünstige und auch für den Fahrer des Fahrzeugs oder eine mit der Wartung des entsprechenden Systems beauftragte Person leicht nachvollziehbare Möglichkeit dar, das Fahrzeug dazu zu veranlassen, den wenigstens einen Betriebsparameter anzupassen, da der Fahrer leicht selbst erkennen kann, in welchem Bereich er sich momentan befindet und daher überprüfen kann, ob entsprechende Betriebsparameter richtig eingestellt sind. Außerdem können umstehende Personen die Markierungen ebenfalls wahrnehmen und ihr Verhalten dementsprechend anpassen, beispielsweise könnte eine farbige Markierung auch Fußgänger vor Bereichen warnen, in denen mit schnell fahrenden Fahrzeugen zu rechnen ist.

Ferner sind derartige Markierungen auch leicht wieder zu entfernen oder zu ändern, wenn die gewünschten Anpassungen des wenigstens einen Betriebsparameter in einem bestimmten Gebiet geändert werden sollen. Selbstverständlich könnte die erste und/oder zweite Bedingung auch durch andere Mittel als farbige Markierungen gebildet sein, beispielsweise durch reflektierende Streifen verschiedener Breite oder ganz allgemein Markierungen mit einer vorbestimmten Breite auf dem Untergrund, deren unterschiedliche Breiten von der Erfassungseinrichtung zum Erfassen der ersten und zweiten vorbestimmten Bedingung verwendet werden können. In dieser Weise kann sich eine Art von vereinfachtem Barcode-Muster durch eine Abfolge von Markierungen mit unterschiedlicher Breite ergeben.

Beispielsweise könnten an einer Einfahrt von einem Werksgelände in eine Halle zunächst eine rote Markierung und dann eine grüne Markierung vorgesehen werden, wobei Fahrzeuge bei Einfahrt in die Halle zunächst die rote Markierung und dann die grüne Markierung überfahren. Wenn somit zunächst die optische Erfassungseinrichtung die rote Markierung und anschließend die grüne Markierung erfasst, könnte als Beispiel für einen Betriebsparameter eine maximal zulässige Höchstgeschwindigkeit des Fahrzeugs herabgesetzt werden. Umgekehrt würde bei einer Ausfahrt des Fahrzeugs aus der Halle auf das Werksgelände zunächst die grüne Markierung und anschließend die rote Markierung überfahren werden, woraufhin das Fahrzeug die maximal zulässige Höchstgeschwindigkeit auf einen höheren Wert anheben könnte.

Wie bereits angesprochen, kann der wenigstens eine Betriebsparameter eine zulässige Maximalgeschwindigkeit des Fahrzeugs und/oder einen Betrieb eines Anbaugeräts des Fahrzeugs betreffen. Hierbei sollte darauf geachtet werden, dass die Anpassung der Betriebsparameter für den Fahrer des Fahrzeugs nicht in einer überraschenden Weise oder so abrupt durchgeführt wird, dass hierdurch selbst eine Sicherheitsgefährdung entstehen könnte. Beispielsweise könnte eine Begrenzung der zulässigen Maximalgeschwindigkeit über eine vorbestimmte Zeitspanne linear von einem hohen ersten Wert zu einem niedrigeren zweiten Wert durchgeführt werden.

Bei dem Anbaugerät könnte es sich beispielsweise um die ebenfalls bereits genannten Scheibenwischer handeln, die bei einer Einfahrt in einen überdachten Bereich automatisch deaktiviert werden könnten. Bei komplexeren Fahrzeugen, wie beispielsweise Flurförderzeugen mit Hubeinrichtungen, könnten ferner Betriebsparameter der Hubeinrichtung automatisch angepasst werden, beispielsweise könnte eine maximale Hubhöhe eines Lastaufnahmegeräts festgelegt werden oder eine maximale Hubgeschwindigkeit des Lastaufnahmegeräts gegenüber dem Fahrzeugkörper. Prinzipiell sind jedoch sämtliche steuerbaren Betriebsparameter des Fahrzeugs und seiner Anbaugeräte durch das erfindungsgemäße Verfahren anpassbar. Ferner sei darauf hingewiesen, dass der Begriff "Betriebsparameter" im allgemeinsten Fall auch lediglich das Ausgeben einer Warnung oder eines Hinweises an den Fahrer betreffen kann, so dass beispielsweise auch der Betrieb einer Warnlampe, eines akustischen Signals oder einer Anzeigevorrichtung als Betriebsparameter zu verstehen ist.

In einem zweiten Aspekt betrifft die vorliegende Erfindung ein Fahrzeug, beispielsweise ein Flurförderzeug, umfassend:
- wenigstens eine optische Erfassungseinrichtung zum Erfassen des Untergrunds und zum Ausgeben von wenigstens einer Eigenschaft des Untergrunds repräsentierenden Daten; und
- eine Steuereinheit zum Auswerten der Daten hinsichtlich eines Vorliegens einer ersten vorbestimmten Bedingung und einer zweiten vorbestimmten Bedingung;
wobei die Steuereinheit ferner dazu eingerichtet ist, auf ein Vorliegen der ersten vorbestimmten Bedingung und ein anschließendes Vorliegen der zweiten vorbestimmten Bedingung hin, ein Steuersignal zum Anpassen wenigstens eines Betriebsparameters des Fahrzeugs auszugeben.

Es versteht sich, dass die jeweiligen Komponenten oder Anbaugeräte des Fahrzeugs, die von dem Anpassen des wenigstens einen Betriebsparameters jeweils betroffen sind, dazu eingerichtet sein müssen, die von der Steuereinrichtung ausgegebenen Steuersignale entsprechend zu verarbeiten.

Entsprechend dem erfindungsgemäßen Verfahren ist auch die Steuereinheit des erfindungsgemäßen Fahrzeugs dazu eingerichtet, das Anpassen des wenigstens einen Betriebsparameters nur durchzuführen, wenn die zweite Bedingung innerhalb einer vorbestimmten Zeitspanne und/oder während einer vorbestimmten zurückgelegten Wegstrecke nach dem Vorliegen der ersten Bedingung vorliegt. Hierzu kann auf ohnehin in derartigen Fahrzeugen vorgesehene oder wenigstens an sich bekannte Komponenten, wie beispielsweise eine Stoppuhr oder einen Radwinkelsensor, zurückgegriffen werden, um die vorbestimmte Zeitspanne und/oder die vorbestimmte zurückgelegte Wegstrecke zu überwachen.

Wie bereits weiter oben angesprochen, kann die wenigstens eine optische Erfassungseinrichtung dazu eingerichtet sein, farbige Markierungen auf dem Untergrund zu erfassen.

Die Erfassungseinrichtung des Fahrzeugs kann vorzugsweise an der Unterseite des Fahrzeugs angeordnet sein, weiter vorzugsweise in Breitenrichtung des Fahrzeugs im Wesentlichen im Bereich der Mittelachse des Fahrzeugs. Auf diese Weise ist die Erfassungseinrichtung bestmöglich gegen unerwünscht von den Seiten des Fahrzeugs her einfallendes Licht geschützt, so dass durch diese Maßnahme ein zuverlässiger Betrieb des erfindungsgemäßen Fahrzeugs gewährleistet werden kann.

Zuletzt betrifft die vorliegende Erfindung ein System, umfassend ein erfindungsgemäßes Fahrzeug und einen von dem Fahrzeug befahrbaren Untergrund, wobei der Untergrund in wenigstens einem ersten Bereich die erste vorbestimmte Bedingung erfüllt und in wenigstens einem zweiten Bereich die zweite vorbestimmte Bedingung erfüllt. Wie bereits oben im Zusammenhang mit dem erfindungsgemäßen Verfahren angesprochen, kann beispielsweise in dem ersten Bereich eine Markierung in einer ersten Farbe vorgesehen sein, während in dem zweiten Bereich eine Markierung in einer zweiten Farbe vorgesehen sein kann, wobei die jeweilige Anpassung des entsprechenden Betriebsparameters abhängig von der Reihenfolge des Überfahrens der beiden Markierungen stattfinden kann. Ein derartiges System zeichnet sich durch seine Robustheit, seinen geringen Verschleiß und seine einfache Wartung aus, da die Markierungen leicht anzubringen, zu überwachen und zu pflegen sind.

Weitere Merkmale und Vorteile der vorliegenden Erfindung werden aus der nachfolgenden Beschreibung deutlich, wenn diese zusammen mit den beiliegenden Figuren betrachtet wird. Diese zeigen im Einzelnen:
- Figur 1: eine schematische Seitenansicht eines erfindungsgemäßen Fahrzeugs;
- Figur 2: ein Blockschaubild der das erfindungsgemäße Verfahren ausführenden Komponenten des Fahrzeugs aus Figur 1; und
- Figur 3: eine Ausführungsform einer Untergrundfläche, die zusammen mit dem Fahrzeug aus Figur 1 ein erfindungsgemäßes System bildet.

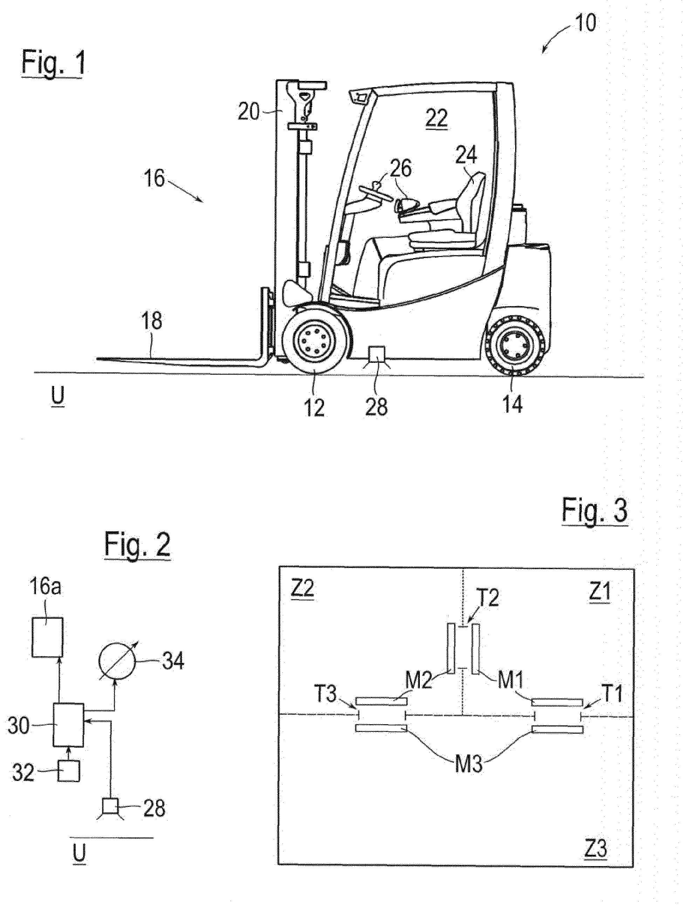

In Figur 1 ist ein erfindungsgemäßes Fahrzeug gezeigt und ganz allgemein mit dem Bezugszeichen 10 bezeichnet. Das Fahrzeug 10 ist als Flurförderzeug in Form eines an sich bekannten Gegengewichtgabelstaplers gebildet, der ebenfalls an sich bekannte Komponenten, wie ein angetriebenes Paar Vorderräder 12 und ein gelenktes Paar Hinterräder 14, umfasst, die jeweils auf dem Untergrund U aufstehen, auf dem sich das Fahrzeug 10 fortbewegt.

Ferner umfasst das Fahrzeug 10 eine Hubeinrichtung 16, die wiederum ein Lasttrageelement 18 in Form einer Gabel umfasst, die höhenverlagerbar an einem Hubgerüst 20 aufgenommen ist. Des Weiteren umfasst das Fahrzeug 10 eine Fahrerkabine 22, in der ein (nicht gezeigter) Fahrer des Fahrzeugs 10 auf einem Fahrersitz 24 Platz nehmen und das Fahrzeug 10 mittels Bedienelementen 26 steuern kann, die ein Lenkrad sowie einen Hydraulikpiloten zur Steuerung der Hubvorrichtung 16 umfassen.

Des Weiteren umfasst das Fahrzeug 10 an seinem Unterboden im Bereich zwischen den Vorderrädern 12 und den Hinterrädern 14 im Wesentlichen auf Höhe der Mittelachse in Fahrzeugbreite eine optische Erfassungseinrichtung 28, die eine Kamera und einen kleinen Scheinwerfer umfasst. Dieser Scheinwerfer stellt einen korrekten Weißabgleich und eine definierte Farbtemperatur sicher, indem er eine gleichmäßige Beleuchtung des Untergrunds U und der darauf befindlichen Markierungen garantiert, so dass er die Zuverlässigkeit der optischen Erfassungseinrichtung verbessert. Hierbei ist die optische Erfassungseinrichtung 28 derart ausgerichtet, dass der Untergrund U unterhalb des Fahrzeugs 10 in einem Bereich zwischen den Rädern 12 und 14 beleuchtet wird und gleichzeitig von der Kamera erfasst wird. In der gezeigten Ausführungsform ist die Kamera ferner mit einem Farberkennungsmodul ausgerüstet und gibt Daten aus, die Informationen über die Farbe des momentan von ihr erfassten Untergrunds unter dem Fahrzeug 10 enthalten.

Figur 2 zeigt nun grob schematisch die Einbindung der optischen Erfassungseinrichtung 28 in die Steuerungselektronik des Fahrzeugs 10. Wie bereits angesprochen, gibt die optische Erfassungsreinrichtung 28 Informationen über die Farbe des von ihr momentan erfassten Untergrunds U aus, die von der Steuereinheit 30 des Fahrzeugs 10 empfangen werden. Die Steuereinheit 30 kann beispielsweise in die zentrale Steuerung des Fahrzeugs 10 integriert oder wenigstens mit ihr gekoppelt sein und kann ferner auf einen Speicher 32 zurückgreifen, in dem für den erfindungsgemäßen Betrieb der Steuereinheit 30 notwendige Daten und Algorithmen hinterlegt sind.

Wird nun von der optischen Erfassungseinrichtung 28 im Fahrbetrieb des Fahrzeugs 10 hintereinander zunächst das Vorliegen einer ersten vorbestimmten Bedingung und anschließend das Vorliegen einer zweiten vorbestimmten Bedingung erfasst und an die Steuereinheit 30 gemeldet, so gibt diese auf dieser Grundlage Steuersignale zum Anpassen wenigstens eines Betriebsparameters des Fahrzeugs an entsprechende Komponenten und/oder Anbauteile des Fahrzeugs 10 aus.

Beispielsweise kann es sich hierbei um eine Steuerung 16a der Hubeinrichtung 16 handeln, mittels derer selektiv abhängig von den Erfassungen der optischen Erfassungseinrichtung eine maximale Hubhöhe des Lastaufnahmemittels 18 angepasst werden kann. In gleicher Weise kann die Steuereinrichtung 30 Steuersignale an einen Tempomaten 34 ausgeben, der eine maximale zulässige Geschwindigkeit des Fahrzeugs festlegt.

Es sei darauf hingewiesen, dass die Elemente 16a, 32 und 34 durchaus in derselben physischen Komponente wie die Steuereinrichtung 30 ausgeführt sein können, d.h. dass die Steuerung 16a der Hubeinrichtung 16 gegebenenfalls von demselben physischen Prozessor durchgeführt werden kann, der auch als Steuereinheit 30 für das erfindungsgemäße Verfahren wirkt.

Zuletzt ist in Figur 3 ein Untergrund U dargestellt, der zusammen mit dem Fahrzeug aus Figur 1 ein erfindungsgemäßes System bildet. Der Untergrund U ist in drei Zonen Z1, Z2 und Z3 eingeteilt, wobei beispielsweise die Zonen Z1 und Z2 im Inneren einer Lagerhalle liegen, während die Zone Z3 außerhalb der Lagerhalle auf einem Betriebsgelände liegt. Hierbei ist zwischen der Zone Z3 und der Zone Z1 ein erstes Tor T1, zwischen der Zone Z1 und Zone Z2 ein zweites Tor T2 und zwischen der Zone Z2 und der Zone Z3 ein drittes Tor T3 vorgesehen.

Den drei Toren T1 - T3 sind jeweils zwei farbige Markierungen zugeordnet, wobei im gezeigten Beispiel an den Ausfahrten der Tore T1 und T2 an der Seite der Zone Z1 jeweils eine Markierung M1, an der Seite der Zone Z2 an den Toren T2 und T3 jeweils eine Markierung M2 und an der Seite der Zone Z3 an den Toren T1 und T3 jeweils eine Markierung M3 vorgesehen ist. Bei den Markierungen M1, M2 und M3 handelt es sich um farbige Streifen in drei verschiedenen Farben, beispielsweise Grün, Blau und Rot, die sich jeweils über die gesamte Breite der einzelnen Tore T1 - T3 quer zur Durchfahrtsrichtung von Fahrzeugen erstrecken, um Fälle auszuschließen, in denen ein Tor passiert wird, ohne dass die entsprechende Markierung überfahren wird.

Durchfährt das Fahrzeug 10 aus Figur 1 eines der Tore T1 - T3, so kann es mit Hilfe der Erfassungseinrichtung 28 und der Steuereinheit 30 anhand der entsprechenden Markierung M1 - M3 feststellen, in welche der drei Zonen Z1 - Z3 es sich momentan hineinbewegt. Auf Grundlage der überfahrenen Markierungen M1 - M3 und damit der Kenntnis darüber, in welcher Zone sich das Fahrzeug 10 hiernach befindet, kann die Steuereinrichtung 30 nun die bereits angesprochenen Steuersignale ausgeben, um Betriebsparameter des Fahrzeugs 10 anzupassen.

Beispielsweise kann gewünscht sein, in Zone Z1 eine maximal zulässige Geschwindigkeit festzulegen, insbesondere wenn in Zone Z1 mit besonders hohem Verkehrsaufkommen oder vielen Fußgängern zu rechnen ist. Des Weiteren kann in Zone Z2 festgelegt sein, dass das Fahrzeug 10 sein Lasttragemittel 18 nicht über eine vorbestimmte Höhe anheben darf, beispielsweise weil sich dort Hindernisse befinden, gegen die ein von einem Lastaufnahmemittel getragener Gegenstand stoßen könnte. Zuletzt könnte festgelegt sein, dass in Zone Z3 ein Scheibenwischer des Fahrzeugs 10 aktiviert oder wenigstens dem Fahrer zur Aktivierung freigegeben ist, während in den Zonen Z1 und Z2, die, wie angesprochen, überdacht sind, der Scheibenwischer dementsprechend stets ausgeschaltet sein könnte.

Die vorliegende Erfindung betrifft ein Verfahren zum Anpassen wenigstens eines Betriebsparameters eines Fahrzeugs (10) während seiner Fahrt, umfassend ein Erfassen des Untergrunds (U), auf welchem die Fahrt des Fahrzeugs (10) stattfindet, mittels einer dem Fahrzeug (10) zugeordneten optischen Erfassungseinrichtung (28), ein Ausgeben von wenigstens eine Eigenschaft des Untergrunds (U) repräsentierenden Daten durch die Erfassungseinrichtung (28), ein Auswerten der Daten hinsichtlich eines Vorliegens einer ersten vorbestimmten Bedingung, auf ein Vorliegen der ersten vorbestimmten Bedingung hin ein Auswerten der Daten hinsichtlich eines Vorliegens einer zweiten vorbestimmten Bedingung; und auf ein Vorliegen der zweiten vorbestimmten Bedingung hin ein Anpassen des wenigstens einen Betriebsparameters gemäß einer vorbestimmten Anpassungsvorschrift. Ferner betrifft die Erfindung ein entsprechendes Fahrzeug und ein aus dem Fahrzeug und einem Untergrund gebildetes System.

## Patentansprüche

1. Verfahren zum Anpassen wenigstens eines Betriebsparameters eines Fahrzeugs (10) während seiner Fahrt, umfassend:
- Erfassen des Untergrunds (U), auf welchem die Fahrt des Fahrzeugs (10) stattfindet, mittels einer dem Fahrzeug (10) zugeordneten optischen Erfassungseinrichtung (28);
- Ausgeben von wenigstens eine Eigenschaft des Untergrunds (U) repräsentierenden Daten durch die Erfassungseinrichtung (28);
- Auswerten der Daten hinsichtlich eines Vorliegens einer ersten vorbestimmten Bedingung;
- auf ein Vorliegen der ersten vorbestimmten Bedingung hin: Auswerten der Daten hinsichtlich eines Vorliegens einer zweiten vorbestimmten Bedingung; und
- auf ein Vorliegen der zweiten vorbestimmten Bedingung hin:
Anpassen des wenigstens einen Betriebsparameters gemäß einer vorbestimmten Anpassungsvorschrift, **dadurch gekennzeichnet, dass** das Auswerten der Daten hinsichtlich des Vorliegens der zweiten Bedingung lediglich innerhalb einer vorbestimmten Zeitspanne und/oder während einer vorbestimmten zurückgelegten Wegstrecke nach Vorliegen der ersten Bedingung durchgeführt wird.

2. Verfahren nach Anspruch 1, wobei die erste und/oder zweite Bedingung ein Vorliegen einer Markierung (M1 - M3) mit einer vorbestimmten Farbe auf dem Untergrund (U) ist.

3. Verfahren nach einem der vorhergehenden Ansprüche, wobei die erste und/oder zweite Bedingung ein Vorliegen einer Markierung mit einer vorbestimmten Breite auf dem Untergrund ist.

4. Verfahren nach einem der vorhergehenden Ansprüche, wobei der wenigstens eine Betriebsparameter eine zulässige Maximalgeschwindigkeit des Fahrzeugs (10) umfasst und/oder einen Betrieb eines Anbaugeräts des Fahrzeugs (10) betrifft.

5. Fahrzeug (10), beispielsweise Flurförderzeug, umfassend:
- wenigstens eine optische Erfassungseinrichtung (28) zum Erfassen des Untergrunds (U) und zum Ausgeben von wenigstens einer Eigenschaft des Untergrunds (U) repräsentierenden Daten; und
- eine Steuereinheit (30) zum Auswerten der Daten hinsichtlich eines Vorliegens einer ersten vorbestimmten Bedingung und einer zweiten vorbestimmten Bedingung;
wobei die Steuereinheit (30) ferner dazu eingerichtet ist, auf ein Vorliegen der ersten vorbestimmten Bedingung und ein anschließendes Vorliegen der zweiten vorbestimmten Bedingung hin, ein Steuersignal zum Anpassen wenigstens eines Betriebsparameters des Fahrzeugs auszugeben, **dadurch gekennzeichnet, dass** die Steuereinheit (30) ferner dazu eingerichtet ist, das Anpassen des wenigstens einen Betriebsparameters nur durchzuführen, wenn die zweite Bedingung innerhalb einer vorbestimmten Zeitspanne und/oder während einer vorbestimmten zurückgelegten Wegstrecke nach dem Vorliegen der ersten Bedingung vorliegt.

6. Fahrzeug nach Anspruch 5, wobei die wenigstens eine optische Erfassungseinrichtung (28) dazu eingerichtet ist, farbige Markierungen (M1 - M3) auf dem Untergrund (U) zu erfassen.

7. Fahrzeug nach einem der Ansprüche 5 oder 6, wobei die Erfassungseinrichtung (28) an der Unterseite des Fahrzeugs (10) angeordnet ist, vorzugsweise in Breitenrichtung des Fahrzeugs (10) im Wesentlichen im Bereich der Mittelachse des Fahrzeugs (10).

8. System, umfassend ein Fahrzeug (10) nach einem der Ansprüche 5 bis 7 sowie einen von dem Fahrzeug befahrbaren Untergrund (U), wobei der Untergrund in wenigstens einem ersten Bereich (M1 - M3) die erste vorbestimmte Bedingung erfüllt und in wenigstens einem zweiten Bereich die zweite vorbestimmte Bedingung erfüllt.

## Claims

1. Method for adjusting at least one operating parameter of a vehicle (10) during travel thereof, comprising:
- detecting the ground (U) on which the travel of the vehicle (10) takes place by means of an optical detection device (28) associated with the vehicle (10);
- outputting data representing at least one property of the ground (U) by means of the detection device (28);
- evaluating the data with regard to a first predetermined condition being met;
- if the first predetermined condition is met: evaluating the data with regard to a second predetermined condition being met; and
- if the second predetermined condition is met: adjusting the at least one operating parameter according to a predetermined adjustment specification, **characterised in that** the evaluation of the data with regard to the second predetermined condition being met is only carried out within a predetermined period of time and/or during a predetermined distance travelled after the first condition has been met.

2. Method according to claim 1, wherein the first and/or second condition is a presence of a marking (M1-M3) having a predetermined colour on the ground (U).

3. Method according to either of the preceding claims, wherein the first and/or second condition is a presence of a marking having a predetermined width on the ground.

4. Method according to any of the preceding claims, wherein the at least one operating parameter comprises a permissible maximum speed of the vehicle (10) and/or relates to an operation of an attachment of the vehicle (10).

5. Vehicle (10), for example an industrial truck, comprising:
- at least one optical detection device (28) for detecting the ground (U) and for outputting data representing at least one property of the ground (U); and
- a control unit (30) for evaluating the data with regard to a first predetermined condition and a second predetermined condition being met;
the control unit (30) further being designed to output a control signal for adjusting at least one operating parameter of the vehicle when the first predetermined condition is met and the second predetermined condition is subsequently met, **characterised in that** the control unit (30) is also designed to only carry out the adjustment of the at least one operating parameter if the second condition is met within a predetermined period of time and/or during a predetermined distance travelled after the first condition has been met.

6. Vehicle according to claim 5, wherein the at least one optical detection device (28) is designed to detect coloured markings (M1-M3) on the ground (U).

7. Vehicle according to either claim 5 or claim 6, wherein the detection device (28) is arranged on the underside of the vehicle (10), preferably substantially in the region of the central axis of the vehicle (10) in the width direction of the vehicle (10).

8. System comprising a vehicle (10) according to any of claims 5 to 7 and ground (U) which can be travelled on by the vehicle, wherein the ground meets the first predetermined condition in at least one first region (M1-M3) and meets the second predetermined condition in at least one second region.

## Revendications

1. Procédé d'adaptation d'au moins un paramètre de fonctionnement d'un véhicule (10) pendant son déplacement, comprenant :
- détection du sol (U) sur lequel se déroule le déplacement du véhicule (10) au moyen d'un dispositif de détection optique (28) associé au véhicule (10) ;
- émission de données représentant au moins une propriété du sol (U) par le dispositif de détection (28) ;
- évaluation des données quant à la présence d'une première condition prédéterminée ;
- en réponse à la présence de la première condition prédéterminée : évaluer les données quant à la présence d'une deuxième condition prédéterminée ; et
- en réponse à la présence de la deuxième condition prédéterminée :
adaptation dudit au moins un paramètre de fonctionnement selon une règle d'adaptation prédéterminée, **caractérisé en ce que** l'évaluation des données concernant la présence de la deuxième condition est effectuée uniquement pendant une période de temps prédéterminée et/ou pendant une distance parcourue prédéterminée après la présence de la première condition.

2. Procédé selon la revendication 1, dans lequel la première et/ou la deuxième condition est la présence d'un marquage (M1 - M3) d'une couleur prédéterminée sur le sol (U).

3. Procédé selon l'une quelconque des revendications précédentes, dans lequel la première et/ou la deuxième condition est une présence sur le sol d'un marquage ayant une largeur prédéterminée.

4. Procédé selon l'une quelconque des revendications précédentes, dans lequel ledit au moins un paramètre de fonctionnement comprend une vitesse maximale autorisée du véhicule (10) et/ou concerne un fonctionnement d'un accessoire du véhicule (10).

5. Véhicule (10), par exemple chariot de manutention, comprenant :
- au moins un dispositif de détection optique (28) pour détecter le sol (U) et pour émettre des données représentant au moins une propriété du sol (U) ; et
- une unité de commande (30) pour évaluer les données en ce qui concerne la présence d'une première condition prédéterminée et d'une deuxième condition prédéterminée ;
l'unité de commande (30) étant en outre agencée pour émettre, en réponse à la présence de la première condition prédéterminée et à la présence subséquente de la deuxième condition prédéterminée, un signal de commande pour ajuster au moins un paramètre de fonctionnement du véhicule, **caractérisé en ce que** l'unité de commande (30) est en outre agencée pour effectuer l'ajustement dudit au moins un paramètre de fonctionnement uniquement si la deuxième condition est présente dans une période de temps prédéterminée et/ou pendant une distance parcourue prédéterminée après la présence de la première condition.

6. Véhicule selon la revendication 5, dans lequel ledit au moins un dispositif de détection optique (28) est adapté pour détecter des marques colorées (M1 - M3) sur le sol (U).

7. Véhicule selon l'une des revendications 5 ou 6, dans lequel le dispositif de détection (28) est disposé sur la face inférieure du véhicule (10), de préférence dans le sens de la largeur du véhicule (10), sensiblement au niveau de l'axe central du véhicule (10).

8. Système comprenant un véhicule (10) selon l'une des revendications 5 à 7 ainsi qu'un sol (U) sur lequel le véhicule peut circuler, le sol remplissant la première condition prédéterminée dans au moins une première zone (M1 - M3) et remplissant la deuxième condition prédéterminée dans au moins une deuxième zone.
